# EUROPEAN PATENT SPECIFICATION

(11) **EP 0 578 350 B1**
(45) Date of publication and mention of the grant of the patent: **10.06.1998**
(21) Application number: 93302102.4
(22) Date of filing: 19.03.1993
(51) Int. Cl.: G01N 27/407

(54) **Oxygen content analysers**
Sauerstoffkonzentrationsanalysator
Analyseurs de contenu d'oxygène

(30) Priority: 30.06.1992 US 906713
(43) Date of publication of application: 12.01.1994
(73) Proprietor: INTERNATIONAL CONTROL AUTOMATION FINANCE S.A., Ville de Luxembourg (LU)
(72) Inventor: Hall, George R., Geneva, Ohio 44041 (US); Barnett, Daniel C., Concord, Ohio 44077 (US); Smith, Robert A., Mentor, Ohio 44060 (US); Jewett, Scotty Y., Lyndhurst, Ohio 44124 (US)
(74) Representative: Pilch, Adam John Michael

(56) References cited:
- FR-A- 2 479 471
- GB-A- 2 067 294
- US-A- 4 096 050
- US-A- 4 132 615
- US-A- 4 297 192
- US-A- 4 591 422

## Description

This invention relates to oxygen content analysers including oxygen sensors, in particular oxygen sensors which may be suitable for use in harsh environments.

US Patent No. US-A-4 591 422 discloses an oxygen sensor for automotive use, on which a protective covering encloses the sensor element to protect the detecting portion of the element.

US Patent No. US-A-5 037 761 (and corresponding EP-A-0 309 104) discloses the use of an automotive type oxygen sensor, such as a so-called lambda sensor, for sensing oxygen in an industrial process analyser.

The use of oxygen sensors for measuring oxygen concentrations in natural gas fired processes is known. When such sensors are used for processes fired with coal or other dirty fuels, errors in accuracy can occur due to SO₂, NO_{X} and other combustion by-products. The SO₂, NO_{X} and other combustion by-products contaminate the sensing element of the oxygen sensor giving rise to calibration shifts, reduced span (by as much as 35%) and other problems.

In order to minimise the problems described above, it is desirable to increase the operating temperature of the sensor. One approach to increasing the sensor operating temperature was to increase the voltage to the heater inside the sensor, as disclosed in EP-A-0 309 104. This increase in voltage was effective in minimising the above problems, but resulted in reductions in heater life.

The use of previously-proposed oxygen sensors in an industrial process analyser may give rise to an undesirable flashback when the process is ignitable. Therefore, it is desirable that any modification to the oxygen sensor which increases the temperature of the sensor without decreasing its heater life should also act as a flash arrestor thereby to prevent flashback.

According to the present invention there is provided a method of operating a shielded automotive type oxygen sensor assembly having an integral heater for heating the sensor to a temperature in the range 705°C to 760°C in response to a predetermined elevated voltage applied to the sensor heater so as to allow the sensor to act as an industrial process oxygen sensor, the method being characterised by the steps of:
replacing the automotive type oxygen sensor shielding with a protective thinner wall shield;
packing the space between the protective shield and the sensor element with an insulating material;
lowering the voltage to the sensor heater below the predetermined elevated voltage; and
rendering the protective shield permeable to allow flow of gas through the insulating material and to the sensor element thereby raising the sensor temperature to the range 788°C to 843°C at the lower voltage level, thereby minimising combustion by-product errors and calibration shifts.

Thus, according to a preferred embodiment of the invention, an automotive type oxygen sensor such as that disclosed in EP-A-0 309 104 is modified by removing its relatively thick protective shield and replacing it with an extremely thin protective shield having a selected number of small holes to control the diffusion rate of gas into the sensor. The inside of the thin shield is filled with a ceramic insulation material of controlled weight and density so as to increase the temperature on the outside surface of the sensor. The thin shield helps to maintain the heat provided by the sensor heater at the sensor thereby to assist in the increase of the operating temperature on the outside surface of the sensor.

The foregoing modifications were found to be effective against calibration shifts (offsets) while maintaining a broad measurement span and long useful life of the sensor. The modifications stabilised the sensor output and reduced the errors caused by SO₂, NO_{X} and other combustion by-products. It is believed that the modifications also act as a flash arrestor for preventing flashback into an ignitable process.

The permeable or porous material of the protective shield may be a ceramic or stainless steel.

The invention will now be described by way of example with reference to the accompanying drawings, throughout which like parts are referred to by like references, and in which:
Figure 1 is a schematic diagram showing the use of an automotive type oxygen sensor in conjunction with an associated power supply for analysing the oxygen content of a gas in an industrial process;
Figure 2 is a side elevational view of the automotive type oxygen sensor of Figure 1 with portions in section;
Figure 3 is a top plan view with a portion cut away of a shield of the sensor assembly modified according to an embodiment of the present invention;
Figure 4 is a side elevational view of the sensor assembly shield of Figure 3, with a portion cut away;
Figure 5 is a side elevational view of a ceramic sensor assembly shield according to another embodiment of the invention; and
Figure 6 is a top plan view of the ceramic shield of Figure 5.

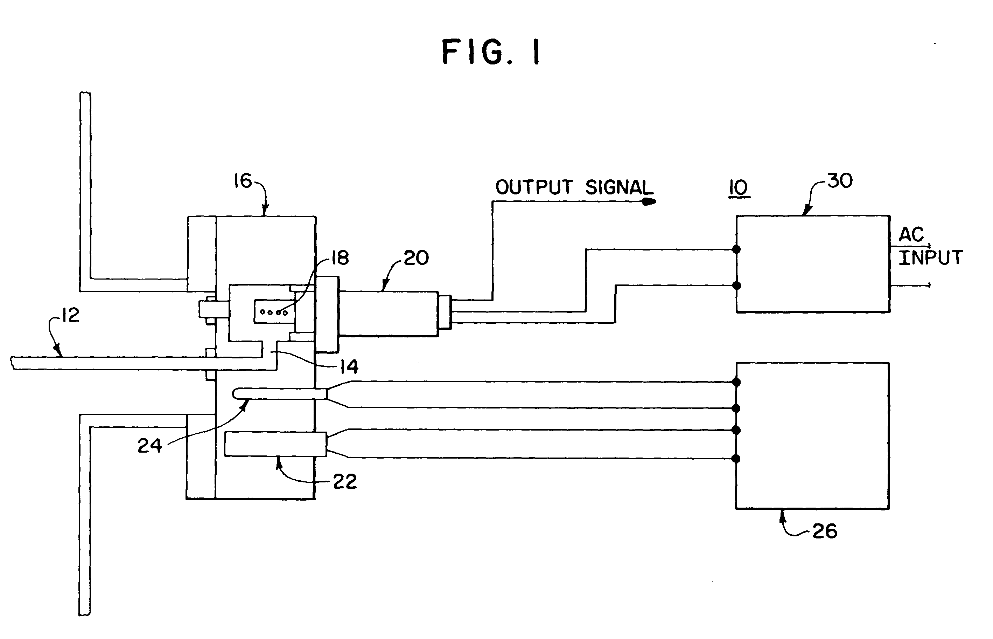

Figure 1 is a schematic diagram of a system 10 for analysing the oxygen content of an industrial process by using an automotive type oxygen sensor 20 such as a lambda sensor, and is broadly similar to Figure 1 of the above-mentioned EP-A-0 309 104. In the system 10, a gas sample is drawn from the monitored industrial process through a sample probe 12. The extraction of the sample is typically accomplished through the use of an air powered aspirator (not shown) within the system 10. The gas sample is directed through a passageway 14 in an analyser manifold 16 across a sensor element assembly of the automotive type oxygen sensor 20 and is exhausted back into the gas flow of the industrial process. The analyser manifold 16 is controlled at a substantially constant temperature above the gas stream dew point, typically 300° to 400°F (150° to 205°C). The controlled manifold temperature provides a substantially constant ambient temperature for the automotive type oxygen sensor 20.

The analyser manifold 16 is heated by heaters 22. A temperature sensing element 24 is connected to a temperature control circuit 26. The circuit 26 provides the voltage to the heaters 22. An integral heater (not shown) within the automotive type oxygen sensor 20 is connected to a power supply 30 which is manually adjusted to provide the desired operating temperature at the sensor element assembly 18 of the automotive type oxygen sensor 20. For the environment in which the sensor of EP-A-0 309 104 is typically used, the operating temperature of the sensor element 18 is in the range of about 1300° to 1400°F (705° to 760°C). Additional details concerning the operation of the analyser can be found in EP-A-0 309 104.

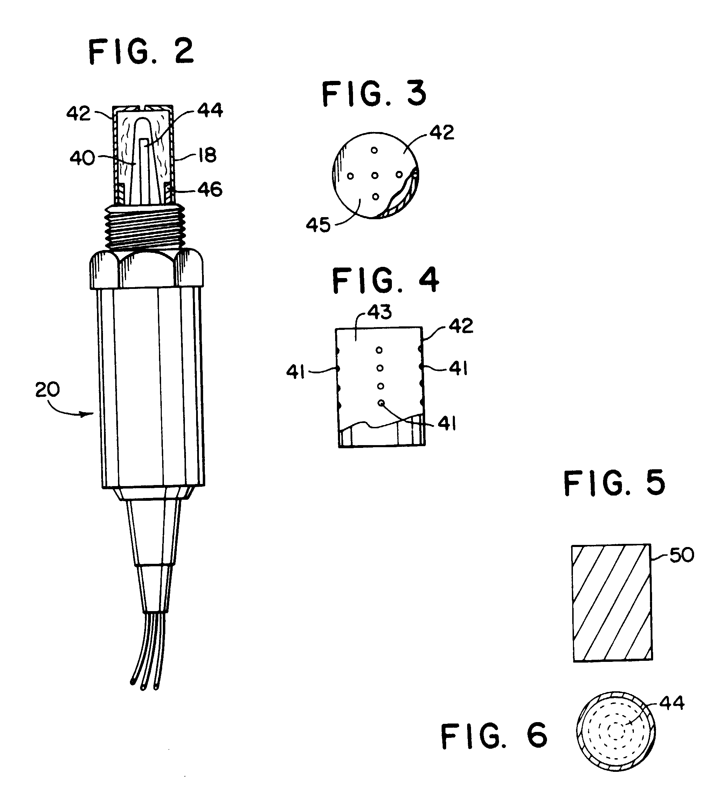

As was described above, when the analyser disclosed in EP-A-0 309 104 is used for processes fired with coal or other dirty fuels, errors in accuracy occur due to SO₂, NO_{X} and other combustion by-products contaminating the sensor element 40 shown in Figure 2 and forming part of the sensor assembly 18. As was also described above, one approach to minimise the occurrence of accuracy errors is to increase the voltage to the heater inside the sensor thereby to increase the sensor operating temperature to a range of about 1450° to 1550°F (788° to 843°C). This increase in voltage and consequent increase in temperature minimised the occurrence of accuracy errors, but resulted in increased heater failure.

The modification proposed by the preferred embodiment of the present invention makes the sensor more efficient, minimises the occurrence of accuracy errors and allows the operating voltage to the heaters 22 to be reduced thereby increasing the life of the sensor. In the preferred embodiment of the sensor system 10 described herein, the voltage to the heaters 22 is reduced from 18 volts as used with the sensor disclosed in EP-A-0 309 104 to 17 volts. It is the modification described herein which allows the reduction in voltage without causing the operating temperature of the sensor element 18 to fall below the lower limit of the 1450° to 1550°F (788° to 843°C) operating range. The end result is that the errors caused by SO₂ and NO_{X} and other combustion by-products can now be less than two percent (2%).

In accordance with one embodiment of the present invention, the usual shield provided around the sensor element is replaced with a thin-walled perforated shield 42, as shown in Figures 2 to 4. The shield 42 is cylindrical in shape and has an outer diameter of about 0.499 to 0.512 in. (12.67 to 13.00 mm) and a height of about 0.685 to 0.695 in. (17.4 to 17.65 mm).

The shield 42 has a pattern of perforations best shown in Figures 3 and 4, which provide free flow of gas into and out of the shield. The interior of the shield 42 is packed with fibres or other permeable insulation material 44, for example KAOWOOL material available from The Babcock and Wilcox Company. The wall thickness of the top of the shield is preferably about 0.015 to 0.020 in. (0.38 to 0.51 mm). The inside diameter of the shield is preferably about 0.467 to 0.470 in. (11.86 to 11.94 mm).

In the embodiment shown in Figures 2 to 4, the shield 42 has a total of 21 holes. Each hole has a diameter of about 0.045 in. (1.14 mm). There are four columns 41 of four holes each arranged essentially symmetrically about the outside surface 43 of the shield 42. Three of these columns can be seen in Figure 4. Vertical spacing between the holes in each column 41 is advantageously about 0.1 in. (2.54 mm).

On the top 45 of the shield 42 as shown in Figure 3, four holes are provided in a circle around a central hole. The circle has a diameter of about 0.280 in. (7.11 mm).

Advantageously, the shield 42 may be fabricated from number 303 stainless steel. The automotive oxygen sensor 20, prior to modification, may be a stock item provided by the Bosch Company, such as that available under stock number 9F-472, and is primarily used in vehicles manufactured by the Ford Motor Company.

Referring to Figure 2, the pre-existing neck 46 in the sensor element assembly is cut off to a height of about 0.140 to 0.150 in. (0.36 to 0.38 mm) and provides the seat for the shield 42. The shield 42 does not have any perforations up to about 0.25 in. (0.64 mm) above the lower end of the shield 42 where the first set of perforations are located.

Alternative embodiments may provide a different number of diffusion holes through a different shield made of the same material as the shield described above, or of another material such as ceramic or other non-metals. The shield may have a different shape than the cylindrical shape or a different hole pattern than the shield shown in Figures 2 to 4. The shield may also be fabricated from any suitable porous material, such as ceramic.

One example of an alternative embodiment involves a ceramic shield 50 having KAOWOOL material 44 therein as shown in Figures 5 and 6.

The following table shows in the first row the sensor temperature and heater temperature (in °F) obtained from the sensor described in EP-A-0 309 104 ("Standard" Sensor) with the voltage of the heaters 22 set at 18 VDC and 19 VDC. The table shows in the second row the sensor temperature and heater temperature (in °F) obtained from a sensor according to the embodiment of the present invention shown in Figures 2 to 4 having a shield insulated with 0.34 to 0.36 gm of KAOWOOL material with the heater voltage respectively set at 17 VDC, 18 VDC and 19 VDC. The table shows in the third row the sensor temperature and heater temperature (in °F) obtained from a sensor as shown in Figures 2 to 4, but without any insulation, for a heater voltage of 18 VDC.

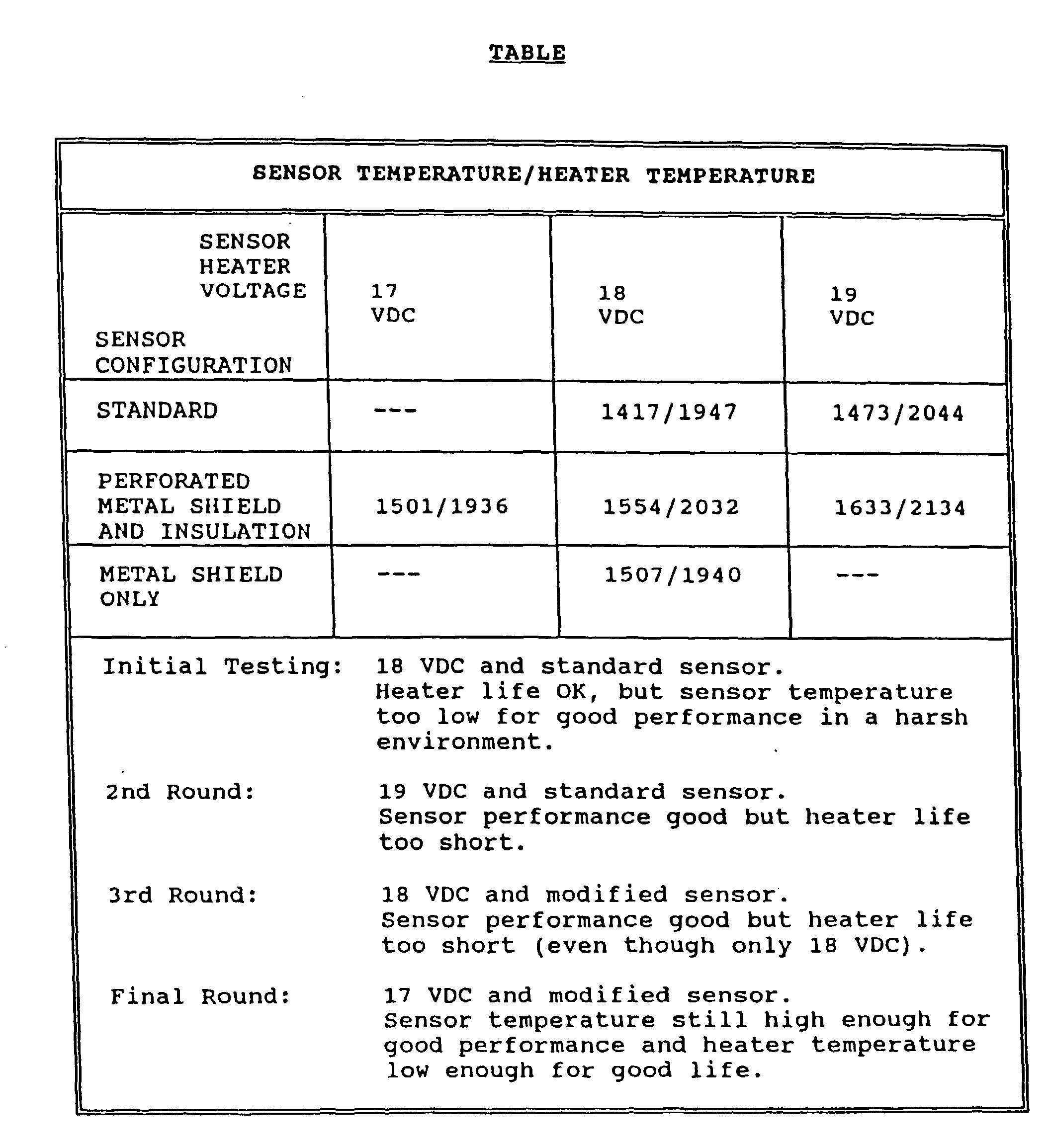

## Claims

1. A method of operating a shielded automotive type oxygen sensor (20) assembly having an integral heater for heating the sensor (20) to a temperature in the range 705°C to 760°C in response to a predetermined elevated voltage applied to the sensor heater so as to allow the sensor (20) to act as an industrial process oxygen sensor, the method being characterised by the steps of:
replacing the automotive type oxygen sensor (20) shielding with a protective thinner wall shield (42);
packing the space between the protective shield (42) and the sensor element (40) with an insulating material (44);
lowering the voltage to the sensor heater below the predetermined elevated voltage; and
rendering the protective shield (42) permeable to allow flow of gas through the insulating material (44) and to the sensor element (44) thereby raising the sensor temperature to the range 788°C to 843°C at the lower voltage level, thereby minimising combustion by-product errors and calibration shifts.

2. A method according to claim 1, wherein the protective shield (42) is made from a porous ceramic material.

3. A method according to claim 1, wherein the protective shield (42) is made from stainless steel.

4. A method according to claim 1, claim 2 or claim 3, wherein the protective shield (42) includes perforations (41).

5. A method according to claim 4, wherein the protective shield (42) is in the form of a cylinder with a closed end (45), and the perforations are provided in columns along the cylinder, and in a pattern in the closed end (45) of the shield (42).

6. A method according to any one of the preceding claims, wherein the insulating material (44) is a permeable insulating material.

7. A method according to claim 6, wherein the permeable insulating material (44) is a ceramic insulation material.

8. A method according to any one of the preceding claims, wherein the predetermined elevated voltage intended to be applied to the sensor heater is 18 volts, and the actual lower voltage applied to the sensor heater is 17 volts.

## Patentansprüche

1. Verfahren zum Betreiben einer abgeschirmten Sauerstoffsensoranordnung (20) vom Automobiltyp mit einem integrierten Erhitzer zum Erhitzen des Sensors (20) auf eine Temperatur im Bereich von 705 bis 760 °C in Reaktion auf eine vorbestimmte erhöhte Spannung, die an den Sensorerhitzer angelegt wird, um den Sensor (20) als einen Industrieverfahren-Sauerstoffsensor arbeiten zu lassen, **gekennzeichnet durch** die Stufen, in denen man
die Abschirmung des Sauerstoffsensors (22) vom Automobiltyp durch eine dünner-wandige Schutzabschirmung (42) ersetzt,
den Raum zwischen der Schutzabschirmung (42) und dem Sensorelement (40) mit einem Isoliermaterial (44) packt,
die Spannung des Sensorerhitzers unter die vorbestimmte erhöhte Spannung senkt und
die Schutzabschirmung (42) durchlässig macht, um einen Gasfluß durch das Isoliermaterial (44) und zu dem Sensorelement (44) zu erlauben und dabei die Sensortemperatur bei dem niedrigeren Spannungswert bis zum Bereich von 788 bis 843 °C ansteigen zu lassen, und so Verbrennungsnebenproduktfehler und Kalibierungsänderungen minimiert.

2. Verfahren nach Anspruch 1, bei dem die Schutzabschirmung (42) aus einem porösen Keramikmaterial besteht.

3. Verfahren nach Anspruch 1, bei dem die Schutzabschirmung (42) aus rostfreiem Stahl besteht.

4. Verfahren nach Anspruch 1, Anspruch 2 oder Anspruch 3, bei dem die Schutzabschirmung (42) Perforationen (41) enthält.

5. Verfahren nach Anspruch 4, bei dem die Schutzabschirmung (42) in der Form eines Zylinders mit einem geschlossenen Ende (45) vorliegt und Perforationen in Reihen entlang dem Zylinder und in einem Muster in dem geschlossenen Ende (54) der Abschirmung (42) vorgesehen sind.

6. Verfahren nach einem der vorausgehenden Ansprüche, bei dem das Isoliermaterial (44) ein durchlässiges Isoliermaterial ist.

7. Verfahren nach Anspruch 6, bei dem das durchlässige Isoliermaterial (44) ein keramisches Isoliermaterial ist.

8. Verfahren nach einem der vorausgehenden Ansprüche, bei dem die vorbestimmte erhöhte Spannung, die an den Sensorerhitzer angelegt werden soll, 18 V beträgt und die an den Sensorerhitzer angelegte tatsächliche niedrigere Spannung 17 V beträgt.

## Revendications

1. Procédé de mise en oeuvre d'un ensemble de capteur d'oxygène (20) de type pour véhicules à moteur avec écran protecteur ayant un dispositif de chauffage intégré pour chauffer le capteur (20) jusqu'à une température située dans la plage entre 705 °C et 760 °C en réponse à une tension élevée prédéterminée appliquée au dispositif de chauffage d'un capteur de manière à permettre au capteur (20) de jouer le rôle de capteur d'oxygène de processus industriel, le procédé étant caractérisé par les étapes consistant à :
remplacer l'écran du capteur d'oxygène de type pour véhicules à moteur (20) par un écran protecteur de paroi plus fin (42) ;
remplir l'espace entre l'écran protecteur (42) et l'élément capteur (40) à l'aide d'un matériau isolant (44);
diminuer la tension appliquée au dispositif de chauffage du capteur jusqu'à une tension inférieure à la tension élevée prédéterminée ; et
rendre l'écran protecteur (42) perméable afin de permettre un écoulement de gaz à travers le matériau isolant (44) et vers l'élément capteur (40) , augmentant ainsi la température du capteur jusqu'à la plage entre 788 °C et 843 °C au niveau de tension inférieure, réduisant ainsi les erreurs des sous-produits de combustion et les décalages d'étalonnage.

2. Procédé selon la revendication 1, dans lequel l'écran protecteur (42) est fabriqué à partir d'un matériau en céramique poreux.

3. Procédé selon la revendication 1, dans lequel l'écran protecteur (42) est fabriqué à partir d'acier inoxydable.

4. Procédé selon la revendication 1, 2 ou 3, dans lequel l'écran protecteur (42) comporte des perforations (41).

5. Procédé selon la revendication 4, dans lequel l'écran protecteur (42) a la forme d'un cylindre avec une extrémité fermée (45), et dans lequel les perforations sont disposées en colonnes le long du cylindre, et en un réseau dans l'extrémité fermée (45) de l'écran (42).

6. Procédé selon l'une quelconque des revendications précédentes, dans lequel le matériau isolant (44) est un matériau isolant perméable.

7. Procédé selon la revendication 6, dans lequel le matériau isolant perméable (44) est un matériau isolant en céramique.

8. Procédé selon l'une quelconque des revendications précédentes, dans lequel la tension élevée prédéterminée conçue pour être appliquée au dispositif de chauffage du capteur est de 18 volts, et dans lequel la tension inférieure réelle appliquée au dispositif de chauffage du capteur est de 17 volts.
